# EUROPEAN PATENT APPLICATION

(11) **EP 4 826 338 A1**
(43) Date of publication of application: **21.10.2026**
(21) Application number: 24920180.7
(22) Date of filing: 16.12.2024
(51) Int. Cl.: G01F 1/684

(54) **FLOW SENSOR AND PROGRAM**

(30) Priority: 23.01.2024 JP 2024008144
(71) Applicant: Mitsumi Electric Co., Ltd., Tama-Shi, Tokyo 206-8567 (JP)
(72) Inventor: AOKI, Hiroshi, Tama-shi, Tokyo 206-8567 (JP)
(74) Representative: Regimbeau
(86) International application number: PCT/JP2024/044405
(87) International publication number: WO 2025/158824

(57) **Abstract**

A flow sensor includes a detector configured to output, one or more first detection signals for calculating thermal conductivity of a fluid, one or more second detection signals for calculating heat capacity of the fluid, and one or more third detection signals for calculating flow rate information of the fluid, and a processor configured to execute processing for correcting the flow rate information using a correction coefficient based on the thermal conductivity calculated from the one or more first detection signals and the heat capacity calculated from the one or more second detection signals.

## Description

### TECHNICAL FIELD

The disclosures herein relate to flow sensors and programs.

### BACKGROUND ART

Conventionally, a flow sensor for detecting a flow rate of a fluid such as air or gas has been known. Patent Literature (PTL) 1 discloses a thermal flow sensor including a heater and a lateral temperature sensor which is disposed in a direction substantially orthogonal to the flow direction of the fluid with respect to the heater so that heat generated from the heater is transmitted only by the thermal diffusion effect of the fluid with little influence of the flow velocity of the fluid, and which detects a temperature of the fluid and outputs a temperature detection signal for calculating the physical property value of the fluid.

### CITATION LIST

### PATENT LITERATURE

PTL 1: Japanese Unexamined Patent Application Publication No. 2008-46143

### SUMMARY OF THE INVENTION

### PROBLEMS TO BE SOLVED BY THE INVENTION

A detected value of a flow rate output from a flow sensor may vary depending on the influence of a thermal property caused by a type and composition of a fluid (hereinafter referred to as "fluid type and the like"). That is, there may be a difference between the detected value of the flow rate output from the flow sensor and the flow rate that actually flows through the flow sensor (hereinafter referred to as an "actual flow rate"). Therefore, in the flow sensor, it is required to reduce the influence of thermal property of the fluid and to detect the actual flow rate with high accuracy.

The present invention aims to provide a flow sensor for reducing influence of thermal property of a fluid.

### MEANS FOR SOLVING PROBLEMS

A flow sensor includes a detector configured to output, one or more first detection signals for calculating thermal conductivity of a fluid, one or more second detection signals for calculating heat capacity of the fluid, and one or more third detection signals for calculating flow rate information of the fluid, and a processor configured to execute processing for correcting the flow rate information using a correction coefficient based on the thermal conductivity calculated from the one or more first detection signals and the heat capacity calculated from the one or more second detection signals.

### EFFECT OF THE INVENTION

According to the present invention, it is possible to provide a flow sensor for reducing influence of thermal property of a fluid.

### BRIEF DESCRIPTION OF THE DRAWINGS

[FIG. 1] FIG. 1 is a block diagram schematically illustrating an example of an overall configuration of a flow sensor according to an embodiment.
[FIG. 2] FIG. 2 is a graph illustrating an example of a relationship between [ρCp/λ] of a plurality of types of fluids and a detection sensitivity ratio of a third sensor unit of the embodiment.
[FIG. 3A] FIG. 3A is a top view schematically illustrating an example of a detector of the flow sensor according to the embodiment.
[FIG. 3B] FIG. 3B is an enlarged partial schematic view illustrating a framed region IIIB indicated by a broken line in FIG. 3A.
[FIG. 4] FIG. 4 is a cross-sectional view schematically illustrating an example of a cross section taken along a line IV-IV in FIG. 3A.
[FIG. 5] FIG. 5 is a block diagram schematically illustrating an example of a hardware configuration of the flow sensor according to the embodiment.
[FIG. 6] FIG. 6 is a flowchart illustrating an example of a detection method using the flow sensor according to the embodiment.
[FIG. 7] FIG. 7 is an example of a drawing illustrating a principle of detecting heat capacity ρCp of a fluid.
[FIG. 8] FIG. 8 is an example of a drawing illustrating the principle of detecting the heat capacity ρCp of the fluid.
[FIG. 9] FIG. 9 is a block diagram schematically illustrating an example of an overall configuration of a flow sensor according to a modification of the embodiment.
[FIG. 10] FIG. 10 is a graph illustrating an example of a temperature profile of a fourth heater switching between a temperature rise operation and a constant temperature operation.
[FIG. 11] FIG. 11 is a graph illustrating an example of a temperature profile of the fourth heater repeating the temperature rise operation and the constant temperature operation.

### DESCRIPTION OF THE PREFERRED EMBODIMENTS

In the following, embodiments of the present invention will be described with reference to the accompanying drawings. In the drawings, the same or corresponding constituent elements are denoted with the same reference numerals, and redundant description thereabout may be omitted.

In the drawings, Cartesian coordinates having an X-axis, a Y-axis, and a Z-axis are used as directional expressions. The X-axis, the Y-axis, and the Z-axis are orthogonal to each other. A Z direction along the Z-axis indicates a direction (hereinafter sometimes referred to as "flow direction") along which a detection target fluid (hereinafter referred to as "a fluid") of the flow sensor according to the embodiment flows.

A direction in which an arrow of the X-axis points is referred to as a +X direction or a +X side, and a direction opposite to the +X direction is referred to as a -X direction or a -X side. A direction in which an arrow of the Y-axis points is referred to as a +Y direction or a +Y side, and a direction opposite to the +Y direction is referred to as a -Y direction or a -Y side. A direction in which an arrow of the Z-axis points is referred to as a +Z direction or a +Z side, and a direction opposite to the +Z direction is referred to as a -Z direction or a -Z side. In the present disclosure, it is assumed that a fluid to be detected flows in the +Z direction. With respect to a target object, the -Z side is referred to as "upstream", and the +Z side is referred to as "downstream". Further, the +Y side is referred to as "upper", and the -Y side is referred to as "lower".

In the present disclosure and the claims, "along the direction" includes an error of ±5 degrees or less between two axes or directions. Further, "orthogonal" includes a range in which an angle with respect to any direction is 90 degrees ±5 degrees. However, these directional expressions do not limit the directions of the embodiment. Any orientation may be applied when the flow sensor is used.

### [Embodiment]

### <Example of Overall Configuration>

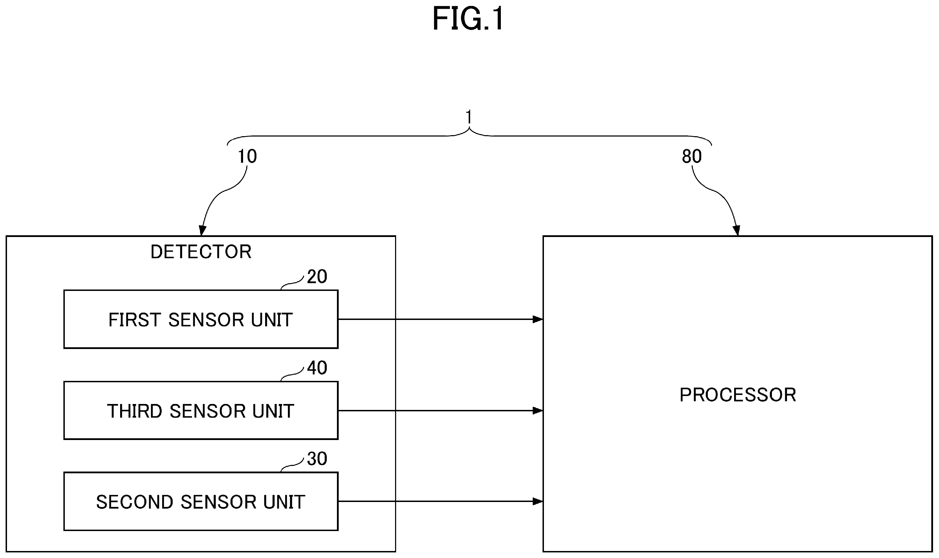

An example of the overall configuration of a flow sensor 1 according to the embodiment will be described with reference to FIG. 1. FIG. 1 is a block diagram schematically illustrating an example of an overall configuration of the flow sensor 1. As shown in FIG. 1, the flow sensor 1 includes a detector 10 and a processor 80. The flow sensor 1 may include other components. The detector 10 and the processor 80 are electrically connected to each other through wiring or the like. Various detection signals detected by the detector 10 are output into the processor 80. The detector 10 includes a first sensor unit 20, a second sensor unit 30, and a third sensor unit 40.

The first sensor unit 20 outputs a voltage signal for calculating thermal conductivity λ of the fluid. The voltage signal output from the first sensor unit 20 is an example of the "first detection signal". The second sensor unit 30 outputs a voltage signal for calculating heat capacity ρCp of the fluid. The voltage signal output from the second sensor unit 30 is an example of the "second detection signal". The third sensor unit 40 outputs a voltage signal for calculating flow rate information F1 of the fluid. The voltage signal output from the third sensor unit 40 is an example of the "third detection signal". Note that the type of heat capacity calculated by the voltage signal from the second sensor unit 30 is not limited to the constant pressure heat capacity ρCp, and may be other types of heat capacity such as the constant volume heat capacity. Hereinafter, unless otherwise specified, the constant pressure heat capacity ρCp is referred to as "heat capacity". The "heat capacity" described herein includes "specific heat."

The processor 80 calculates the thermal conductivity λ of the fluid based on the voltage signal output from the first sensor unit 20. The processor 80 calculates the heat capacity ρCp of the fluid based on the voltage signal output from the second sensor unit 30. The processor 80 calculates the flow rate information F1 of the fluid based on the voltage signal output from the third sensor unit 40. Here, the "flow rate information F1" corresponds to information that is used as a base for calculating a flow rate FL finally output from the flow sensor 1. Examples of the flow rate information F1 include a flow rate detection value based on the voltage signal output from the third sensor unit 40.

Detection sensitivity of the third sensor unit 40 (e.g., a third temperature sensor 42 described separately) may vary depending on the difference in the thermal property of the fluid. In other words, the detection sensitivity of the third sensor unit 40 may vary depending on the type of fluid or the like. For example, with respect to fluids A and B flowing at the same actual flow rate, the voltage value output from the third sensor unit 40 corresponding to the flow rate detection value of the fluid A may be different from the voltage value output from the third sensor unit 40 corresponding to the flow rate detection value of the fluid B. The present inventors have found that when a parameter [ρCp/λ] obtained by dividing the heat capacity ρCp by the thermal conductivity λ is used, a value of [ρCp/λ] for each fluid is approximately proportional to a detection sensitivity ratio of the third sensor unit 40. In order to reduce the influence of the detection sensitivity of the third sensor unit 40, the processor 80 corrects the flow rate information F1 using a correction coefficient Ak based on the thermal conductivity λ and the heat capacity ρCp of the fluid. The processor 80 calculates the flow rate FL of the fluid based on the flow rate information F1 corrected using the correction coefficient Ak.

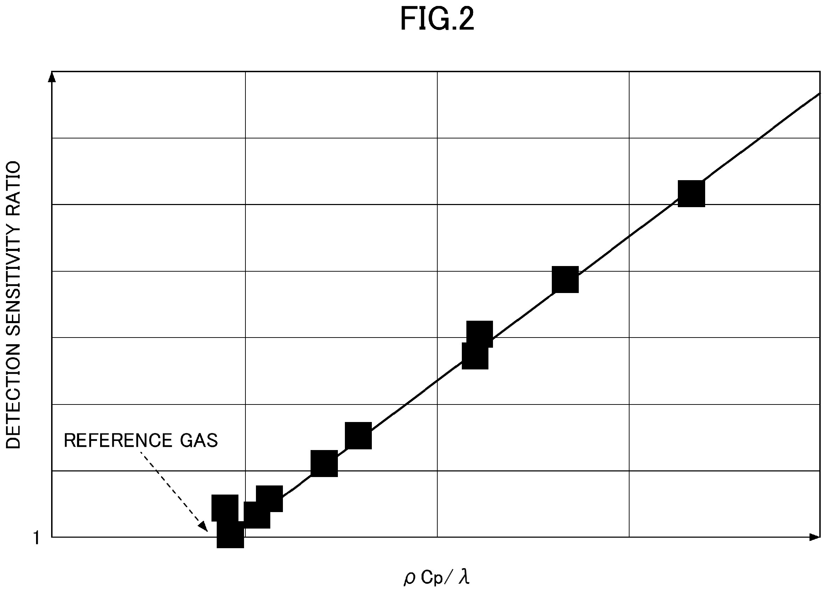

Next, an example of correcting the flow rate information F1 using the correction coefficient Ak will be described with reference to FIG. 2. FIG. 2 is a graph illustrating an example of a relationship between [ρCp/λ] of each fluid and a detection sensitivity ratio of the third sensor unit 40. The horizontal axis in FIG. 2 shows the value of [ρCp/λ] of each fluid. The vertical axis in FIG. 2 shows the detection sensitivity ratio of the third sensor unit 40 for each fluid. Here, the "detection sensitivity ratio" is a relative voltage value corresponding to the flow rate detection value of each fluid output by the third sensor unit 40 when the voltage value corresponding to the flow rate detection value of a reference gas output by the third sensor unit 40 is "1". As the reference gas, for example, any one of air, a methane gas (CH₄), and a nitrogen gas (N₂) can be used. Examples of a plurality of fluids shown in FIG. 2 include natural gases having different mixing ratios of gas components.

As shown in FIG. 2, the value [ρCp/λ] for each fluid is approximately proportional to a detection sensitivity ratio of the third sensor unit 40. Therefore, by using the detection sensitivity ratio corresponding to [ρCp/λ] as the correction coefficient Ak and correcting the flow rate information F1 based on the voltage signal output from the third sensor unit 40, flow rate information independent of the type of fluid or the like can be obtained. Thus, the processor 80 can calculate the flow rate FL of the fluid in which the influence of the detection sensitivity of the third sensor unit 40 is reduced. In addition, according to this correction process, a computational load on the processor 80 during correction of the flow rate information F1 can be reduced.

### <Configuration Example of Detector 10>

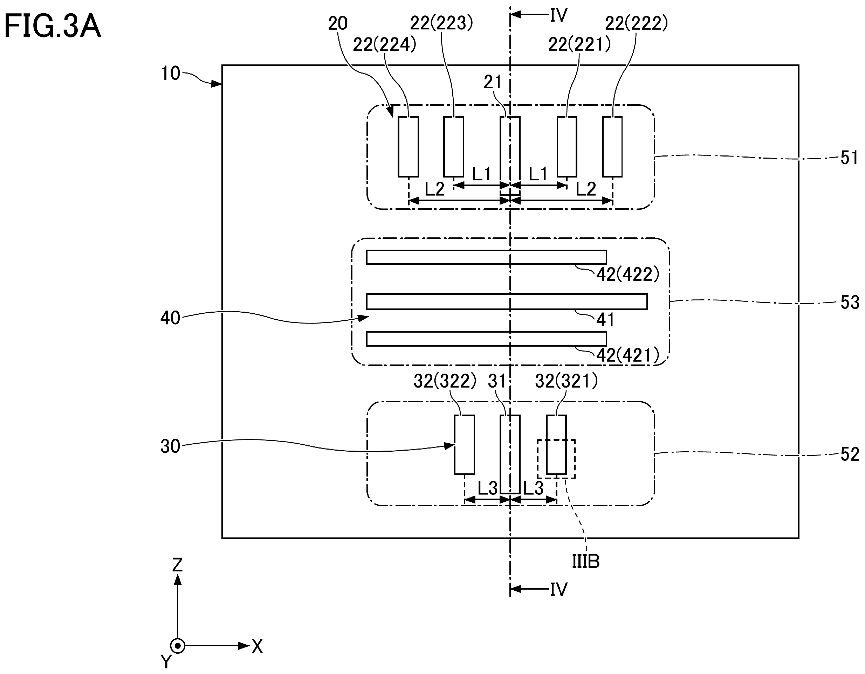

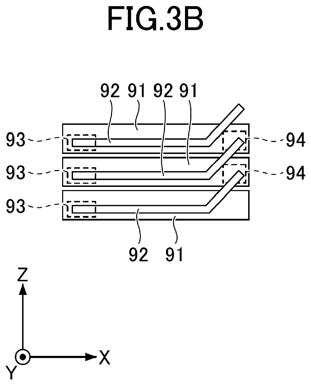

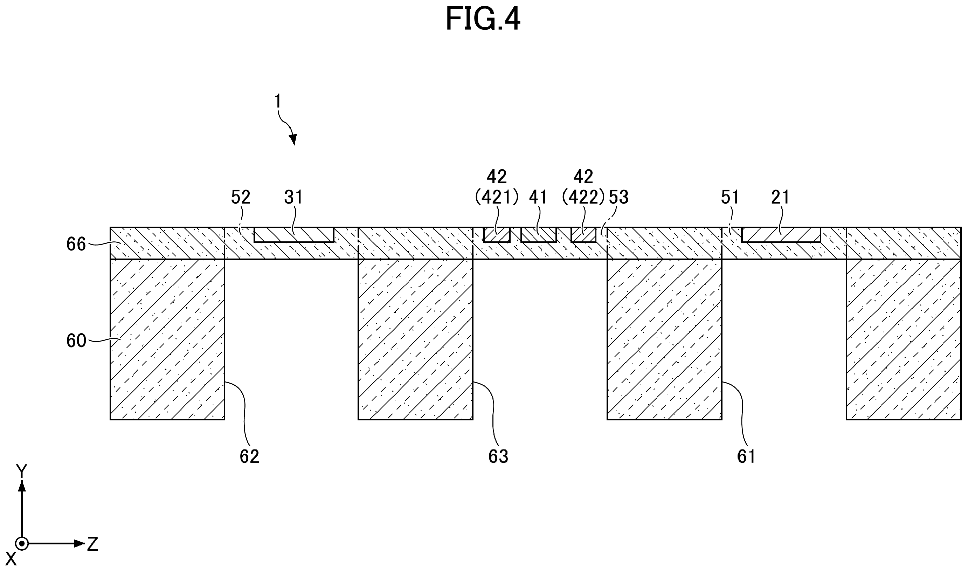

Hereinafter, the components of the flow sensor 1 will be described in detail. First, with reference to FIGS. 3A, 3B, and 4, a configuration example of the detector 10 of the flow sensor 1 will be described. FIG. 3A is a top view schematically illustrating an example of the detector 10 of the flow sensor 1. FIG. 3B is an enlarged partial schematic view illustrating a framed region IIIB indicated by a broken line in FIG. 3A. FIG. 4 is a cross-sectional view schematically illustrating an example of a cross section taken along a line IV-IV in FIG. 3A.

As shown in FIGS. 3A and 4, the detector 10 includes a first membrane 51, a second membrane 52, a third membrane 53, and a support member 60. The first sensor unit 20 is disposed in the first membrane 51, the second sensor unit 30 is disposed in the second membrane 52, and the third sensor unit 40 is disposed in the third membrane 53. In FIG. 3A, the second sensor unit 30, the third sensor unit 40, and the first sensor unit 20 are disposed in this order along the Z direction. However, relative positional relationships among the first sensor unit 20, the second sensor unit 30, and the third sensor unit 40 are not limited thereto.

### (First Sensor Unit 20)

The first sensor unit 20 is, for example, disposed downstream of the third sensor unit 40. The first sensor unit 20 has a first heater 21 and a plurality of first temperature sensors 22. The first heater 21 heats the fluid. The plurality of first temperature sensors 22 output voltage signals corresponding to the temperature of the fluid heated by the first heater 21.

The first heater 21 extends in the Z direction. For example, the first heater 21 includes a heating resistor element that generates heat when energized. However, the first heater 21 may be a different heating element.

The plurality of first temperature sensors 22 includes, for example, four first temperature sensors 221, 222, 223, and 224. In the example shown in FIG. 3A, two first temperature sensors 22 (221, 222) are disposed on the +X side with respect to the first heater 21. The other two first temperature sensors 22 (223, 224) are disposed on the -X side with respect to the first heater 21. However, the number of the first temperature sensors 22 is not limited to four. The plurality of first temperature sensors 22 may include two first temperature sensors 22 disposed on either the +X side or the -X side of the first heater 21.

Each of the plurality of first temperature sensors 22 includes any one of a thermistor, a linear resistance element, a platinum resistance thermometer, a thermocouple, a thermopile, and the like. It is preferable, in terms of characteristics that the plurality of first temperature sensors 22 are of the same type. However, the plurality of first temperature sensors 22 need not necessarily be of the same type, as it is possible to detect temperatures even if they are not of the same type. Each of the plurality of first temperature sensors 22 shown in FIG. 3A is a thermopile including a resistance thermometer.

The plurality of first temperature sensors 22 are aligned in a direction orthogonal to the Z direction. That is, the direction in which the plurality of first temperature sensors 22 are aligned is orthogonal to the flow direction of the fluid. By arranging the plurality of first temperature sensors 22 orthogonal to the flow direction of the fluid, it is possible to reduce inclusion, in voltage signals output from the plurality of first temperature sensors 22, of information indicating temperature changes caused by the flow of the fluid. Thus, the voltage signals output from the plurality of first temperature sensors 22 mainly reflect information on an amount of heat transferred from the periphery of the first heater 21 to the fluid side, and it is possible to improve detection accuracy of the thermal conductivity λ of the fluid.

For example, the plurality of first temperature sensors 22 are aligned in the X direction. As shown in FIG. 3A, the first temperature sensor 221 is disposed closer to the first heater 21 than the first temperature sensor 222. The first temperature sensor 221 is disposed at a distance L1 from the first heater 21. The first temperature sensor 222 is disposed at a distance L2 longer than the distance L1 from the first heater 21.

The first temperature sensor 223 is disposed closer to the first heater 21 than the first temperature sensor 224. For example, the first temperature sensor 223 is disposed at a distance L1 from the first heater 21. That is, the distance between the first temperature sensor 223 and the first heater 21 may be substantially the same as the distance between the first temperature sensor 221 and the first heater 21. However, the distance between the first temperature sensor 223 and the first heater 21 may be different from the distance between the first temperature sensor 221 and the first heater 21. Further, the first temperature sensor 224 is disposed at the distance L2 from the first heater 21. That is, the distance between the first temperature sensor 224 and the first heater 21 may be substantially the same as the distance between the first temperature sensor 222 and the first heater 21. However, the distance between the first temperature sensor 224 and the first heater 21 may be different from the distance between the first temperature sensor 222 and the first heater 21. The distance between the first heater 21 and the first temperature sensor 22 is a distance between the centers of the first heater 21 and the first temperature sensor 22.

### (Second Sensor Unit 30)

The second sensor unit 30 is disposed upstream of the third sensor unit 40. The second sensor unit 30 has a second heater 31 and a plurality of second temperature sensors 32. The second heater 31 heats the fluid. The plurality of second temperature sensors 32 output voltage signals corresponding to the temperature of the fluid heated by the second heater 31.

The second heater 31 extends in the Z direction. For example, the second heater 31 includes a heating resistor element that generates heat when energized. However, the second heater 31 may be a different heating element.

The plurality of second temperature sensors 32 includes, for example, two second temperature sensors 321 and 322. The second temperature sensor 321 is disposed on the +X side with respect to the second heater 31. The second temperature sensor 322 is disposed on the -X side with respect to the second heater 31. However, the number of the second temperature sensors 32 is not limited to two. The number of the second temperature sensors 32 may be three or more.

The second heater 31 is disposed between the second temperature sensor 321 and the second temperature sensor 322. That is, the second temperature sensor 321 and the second temperature sensor 322 are disposed at positions close to the second heater 31. Thus, the second temperature sensors 321 and 322 are disposed in a high-temperature region close to the second heater 31. Therefore, a voltage signal having a relatively large value can be output from each of the second temperature sensors 321 and 322. Thus, a signal-to-noise ratio of the signal can be increased, and detection accuracy of the heat capacity ρCp can be improved.

Each of the plurality of second temperature sensors 32 includes any one of a thermistor, a linear resistance element, a platinum resistance thermometer, a thermocouple, a thermopile, and the like. It is preferable, in terms of characteristics that the plurality of second temperature sensors 32 are of the same type. However, the plurality of second temperature sensors 32 need not necessarily be of the same type, as it is possible to detect temperatures even if they are not of the same type. Each of the plurality of second temperature sensors 32 shown in FIG. 3A is a thermopile including a resistance thermometer.

As shown in FIG. 3B, a thermopile is formed by connecting, in series, a plurality of thermocouples including a first conductor 91 and a second conductor 92. The structure of the thermopile will be described by taking the second temperature sensor 321 as an example. The thermocouples including the first conductor 91 and the second conductor 92 are disposed in the Y direction. The first conductor 91 and the second conductor 92 extend in the X direction perpendicular to the direction in which the second heater 31 extends. Here, among the contacts between the first conductor 91 and the second conductor 92, a contact close to the second heater 31 is a hot junction 93, and among the contacts between the first conductor 91 and the second conductor 92, a contact far from the second heater 31 is a cold junction 94. Temperature information is obtained by measuring the voltage at both ends of the second temperature sensor 321, which is a voltage obtained by amplifying electromotive force due to the temperature difference between the hot junction 93 and the cold junction 94 of each thermocouple. Although the number of thermocouples shown in the figure is three, the number of thermocouples constituting the thermopile is not limited to this. Similarly, the second temperature sensor 322 and the first temperature sensor 22 also have a plurality of thermocouples connected in series with each other.

The plurality of second temperature sensors 32 are aligned in a direction orthogonal to the Z direction. That is, the direction in which the plurality of second temperature sensors 32 are aligned is orthogonal to the flow direction of the fluid. By arranging the plurality of second temperature sensors 32 orthogonal to the flow direction of the fluid, it is possible to reduce inclusion, in voltage signals output from the plurality of second temperature sensors 32, of information indicating temperature changes caused by the flow of the fluid. Thus, the voltage signals output from the plurality of second temperature sensors 32 mainly reflect information on the amount of heat transferred from the periphery of the second heater 31 to the fluid side, and it is possible to improve the detection accuracy of the heat capacity ρCp of the fluid.

For example, the plurality of second temperature sensors 32 are aligned in the X direction. The second temperature sensor 321 is, for example, disposed at a distance L3 from the second heater 31. The distance L3 is preferably shorter than the distance L1, which is a distance between the first heater 21 and the first temperature sensor 221.

The second temperature sensor 322 is, for example, disposed at a distance L3 from the second heater 31. That is, the distance between the second temperature sensor 322 and the second heater 31 may be substantially the same as the distance between the second temperature sensor 321 and the second heater 31. However, the distance between the second temperature sensor 322 and the second heater 31 may be different from the distance between the second temperature sensor 321 and the second heater 31. The distance between the second heater 31 and the second temperature sensor 32 refers to a distance between the centers of the second heater 31 and the second temperature sensor 32.

As described above, the distance L3 between the second heater 31 and the second temperature sensor 32 (e.g., second temperature sensor 321), disposed closest to the second heater 31 among the plurality of second temperature sensors 32, is smaller than the distance L1 between the first heater 21 and the first temperature sensor 22 (e.g., first temperature sensor 221) disposed closest to the first heater 21 among the plurality of first temperature sensors 22. That is, the distance between the second heater 31 and the second temperature sensor 32 is relatively small. As described separately, the second temperature sensor 32 sequentially detects the temperature of the fluid to detect the temperature change of the fluid accompanying the temperature rise of the second heater 31. Further, the processor 80 refers to the information indicating temperature changes of the fluid output from the second temperature sensor 32 to calculate the heat capacity ρCp. Additionally, since the temperature change of the fluid accompanying the temperature rise of the second heater 31 is relatively small, it is sometimes difficult to detect the temperature change of the fluid. Therefore, by disposing the second temperature sensor 32 in a high-temperature region close to the second heater 31, the value of the voltage signal corresponding to the temperature detected by the second temperature sensor 32 can be increased. Thus, the detection accuracy of the temperature change of the fluid accompanying the temperature rise of the second heater 31 can be improved. As a result, the detection accuracy of the heat capacity ρCp can be improved.

### (Third Sensor Unit 40)

The third sensor unit 40 is disposed, in the Z direction, between the first sensor unit 20 and the second sensor unit 30. The third sensor unit 40 has a third heater 41 and a plurality of third temperature sensors 42. The third heater 41 heats the fluid. The plurality of third temperature sensors 42 output voltage signals corresponding to the temperature of the fluid heated by the third heater 41.

The third heater 41 extends, for example, in the X direction perpendicular to the Z direction. The third heater 41 includes, for example, a heating resistor element that generates heat when energized. However, the third heater 41 may be a different heating element.

The plurality of third temperature sensors 42 includes, for example, two third temperature sensors 421 and 422. The third temperature sensor 421 is disposed on the -Z side with respect to the third heater 41. The third temperature sensor 422 is disposed on the +Z side with respect to the third heater 41. However, the number of the third temperature sensors 42 is not limited to two. The number of the third temperature sensors 42 may be three or more.

Each of the plurality of third temperature sensors 42 includes any one of a thermistor, a linear resistance element, a platinum resistance thermometer, a thermocouple, a thermopile, and the like. It is preferable in terms of characteristics that the plurality of third temperature sensors 42 are of the same type. However, the plurality of third temperature sensors 42 need not necessarily be of the same type, as it is possible to detect temperatures even if they are not of the same type. Each of the plurality of third temperature sensors 42 shown in FIG. 3A is a thermopile including a resistance thermometer. Similar to the second temperature sensor 322 and the like, the third temperature sensor 42 also has a plurality of thermocouples connected in series.

The plurality of third temperature sensors 42 are aligned in the Z direction with the third heater 41 interposed therebetween. The distance between the third temperature sensor 421 and the third heater 41 may be the same as or different from the distance between the third temperature sensor 422 and the third heater 41.

### (First Membrane 51, Second Membrane 52, and Third Membrane 53)

The first membrane 51 mounts the first heater 21 and the first temperature sensor 22 of the first sensor unit 20. The first membrane 51 corresponds to a region on an opening 61 of the support member 60, which is described separately, within a thin film structure 66 fixed on the support member 60. At least part of the first heater 21 and the plurality of first temperature sensors 22 need only be mounted on the first membrane 51.

The second membrane 52 mounts the second heater 31 and the second temperature sensor 32 of the second sensor unit 30. The second membrane 52 corresponds to a region on an opening 62 of the support member 60 within the thin film structure 66. At least part of the second heater 31 and the plurality of second temperature sensors 32 need only be mounted on the second membrane 52.

The third membrane 53 mounts the third heater 41 and the third temperature sensor 42 of the third sensor unit 40. The third membrane 53 corresponds to a region on an opening 63 of the support member 60 within the thin film structure 66. At least part of the third heater 41 and the plurality of third temperature sensors 42 need only be mounted on the third membrane 53.

### (Support Member 60)

The support member 60 supports each of the first membrane 51, the second membrane 52, and the third membrane 53. The support member 60 is a frame including substantially rectangular openings 61, 62, and 63 in a top view. The support member 60 includes, for example, silicon.

### <Hardware Configuration Example of Flow Sensor 1>

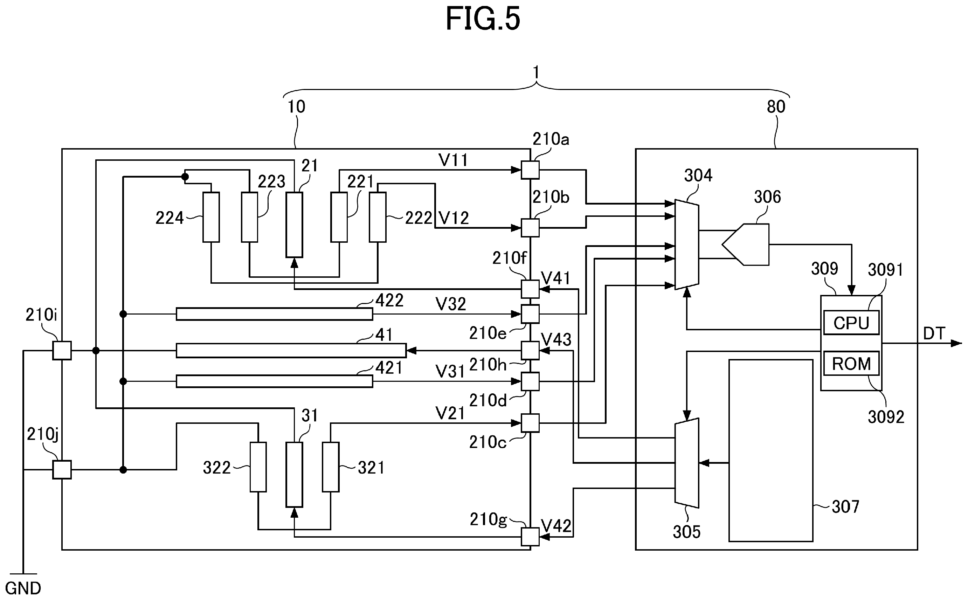

Next, an example of an electrical hardware configuration of the flow sensor 1 will be described with reference to FIG. 5. FIG. 5 is a block diagram schematically illustrating the example of the hardware configuration of the flow sensor 1. In this example, a case where each of the first temperature sensor 22, the second temperature sensor 32, and the third temperature sensor 42 is a thermopile including a resistance thermometer will be described.

The flow sensor 1 has terminals 210a to 210j, multiplexers 304 and 305, an analog-to-digital converter 306, a power supply 307, and a microcontroller 309. The power supply 307 generates a voltage and outputs the voltage to the multiplexer 305. The multiplexer 305 outputs the voltage into the terminals 210f, 210h, and 210g in accordance with an instruction from the microcontroller 309.

The terminals 210a to 210j are, for example, included in the detector 10. One end of each of the first heater 21, the second heater 31, and the third heater 41 is connected to a ground GND via the terminal 210i. One end of each of the first temperature sensors 223 and 224 among the plurality of first temperature sensors 22 is connected to the ground GND via the terminal 210j. One end of the second temperature sensor 322 among the plurality of second temperature sensors 32 is connected to the ground GND via the terminal 210j. One end of each of the third temperature sensors 421 and 422 among the plurality of third temperature sensors 42 is connected to the ground GND via the terminal 210j.

The multiplexers 304 and 305, the analog-to-digital converter 306, the power supply 307, and the microcontroller 309 are included in the processor 80, for example. The power supply for operating these circuits is not shown.

The other end of the first temperature sensor 224 is connected to one end of the first temperature sensor 222, and the other end of the first temperature sensor 222 is connected to the terminal 210b. The other end of the first temperature sensor 223 is connected to one end of the first temperature sensor 221, and the other end of the first temperature sensor 221 is connected to the terminal 210a.

The first temperature sensor 221 and the first temperature sensor 223 are connected in series. A voltage signal V11 is a signal related to a temperature T11 output by the first temperature sensors 221 and 223. The voltage signal V11 is, for example, electromotive forces of the first temperature sensors 221 and 223. The first temperature sensors 221 and 223 outputs information on the detected temperature T11 through the voltage signal V11. The first temperature sensor 222 and the first temperature sensor 224 are connected in series. A voltage signal V12 is a signal related to a temperature T12 output by the first temperature sensors 222 and 224. The voltage signal V12 is, for example, electromotive forces of the first temperature sensors 222 and 224. The first temperature sensors 222 and 224 output information on the detected temperature T12 through the voltage signal V12.

Here, the voltage signal V11 is output into the multiplexer 304 via the terminal 210a. Here, the voltage signal V12 is output into the multiplexer 304 via the terminal 210b.

The other end of the second temperature sensor 322 is connected to one end of the second temperature sensor 321, and one end of the second temperature sensor 321 is connected to the terminal 210c.

The second temperature sensor 321 and the second temperature sensor 322 are connected in series. The voltage signal V21 is a signal related to a temperature T21 output by the second temperature sensor 321. The voltage signal V21 is, for example, electromotive forces of the second temperature sensors 321 and 322. The second temperature sensor 321 outputs information on the detected temperature T21 through a voltage signal V21.

Here, the voltage signal V21 is output into the multiplexer 304 via the terminal 210c.

The other end of the third temperature sensor 421 is connected to the terminal 210d. The other end of the third temperature sensor 422 is connected to the terminal 210e.

The voltage signal V31 is a signal related to a temperature T31 output by the third temperature sensor 421. The voltage signal V31 is, for example, the electromotive force of the third temperature sensor 421. The third temperature sensor 421 outputs information on the detected temperature T31 through the voltage signal V31. The voltage signal V32 is a signal related to a temperature T32 output by the third temperature sensor 422. The voltage signal V32 is, for example, an electromotive force of the third temperature sensor 422. The third temperature sensor 422 outputs information on the detected temperature T32 through the voltage signal V32.

The voltage signal V31 is output into the multiplexer 304 via the terminal 210d. The voltage signal V32 is output into the multiplexer 304 via the terminal 210e.

The multiplexer 304 selectively outputs analog voltage signals such as the voltage signals V11, V12, V21, V31, and V32, into the analog-to-digital converter 306 in accordance with a selection signal from the microcontroller 309.

The analog-to-digital converter 306 converts each of the analog voltage signals input from the multiplexer 304, into a digital signal. The analog-to-digital converter 306 outputs the converted digital signal into the microcontroller 309.

The microcontroller 309 includes, for example, a CPU (Central Processing Unit) 3091 and a ROM (Read Only Memory) 3092. The CPU 3091 of the microcontroller 309 executes arithmetic processing based on the digital signal input from the analog-to-digital converter 306 according to a program. Here, the program is stored in, for example, a storage medium such as the ROM 3092. The ROM 3092 of the microcontroller 309 may store various coefficients for calculating various information such as the thermal conductivity λ of the fluid, the heat capacity ρCp, the flow rate information F1, the correction coefficient Ak, and the flow rate FL. The microcontroller 309 may include another electronic circuit (arithmetic processing circuit) different from the CPU 3091. Examples of the other electronic circuit (arithmetic processing circuit) include a GPU (Graphics Processing Unit), an ASIC (Application Specific Integrated Circuit), and an FPGA (Field Programmable Gate Array). The microcontroller 309 may include another storage medium different from the ROM 3092. Examples of the other storage medium include an EEPROM (Electrically Erasable Programmable Read-Only Memory) and an HDD (Hard Disk Drive). The storage medium such as the ROM 3092 is an example of a storage medium capable of non-temporarily storing a program. Hereinafter, an operation of the arithmetic processing in the CPU 3091 will be described as an operation of the microcontroller 309.

The program may be stored in an external storage medium such as a flexible disk, a hard disk, a CD-ROM, an MO (magnetic disk), a DVD-ROM, and a memory card. The program may also be transmitted to the microcontroller 309 via a communication line. The transmitted program is installed in the ROM 3092 of the microcontroller 309.

The microcontroller 309 calculates the thermal conductivity λ of the fluid based on, for example, a digital signal corresponding to the voltage signals V11 and V12 output from the first temperature sensor 22. The microcontroller 309 also calculates the heat capacity ρCp of the fluid based on, for example, a digital signal corresponding to the voltage signal V21 output from the second temperature sensor 32. The microcontroller 309 also calculates the flow rate information F1 of the fluid based on, for example, a digital signal corresponding to the voltage signals V31 and V32 output from the third temperature sensor 42.

Further, the microcontroller 309 calculates the correction coefficient Ak based on the thermal conductivity λ and the heat capacity ρCp, and executes processing for correcting the flow rate information F1 using the correction coefficient Ak. Further, the microcontroller 309 calculates the flow rate FL of the fluid based on the flow rate information F1 after correction. The microcontroller 309 outputs a voltage signal DT corresponding to the flow rate FL into an external device such as a measurement terminal.

The power supply 307 generates voltages V41, V42 and V43 to be input to the first heater 21, the second heater 31 and the third heater 41, respectively. The power supply 307 outputs voltages V41, V42 and V43 into the multiplexer 305.

The multiplexer 305 outputs a voltage V41 into the first heater 21 according to a selection signal from the microcontroller 309. The multiplexer 305 outputs a voltage V42 into the second heater 31 according to a selection signal from the microcontroller 309. The multiplexer 305 outputs a voltage V43 into the third heater 41 in response to a selection signal from the microcontroller 309.

The voltage V41 is output into the first heater 21 via the terminal 210f. The first heater 21 is heated to a temperature corresponding to the voltage value of the voltage V41. The voltage V42 is output into the second heater 31 via the terminal 210g. The second heater 31 is heated to a temperature corresponding to the voltage value of the voltage V42. The voltage V43 is output into the third heater 41 via the terminal 210h. The third heater 41 is heated according to the voltage value of the voltage V43.

### <Detection Method>

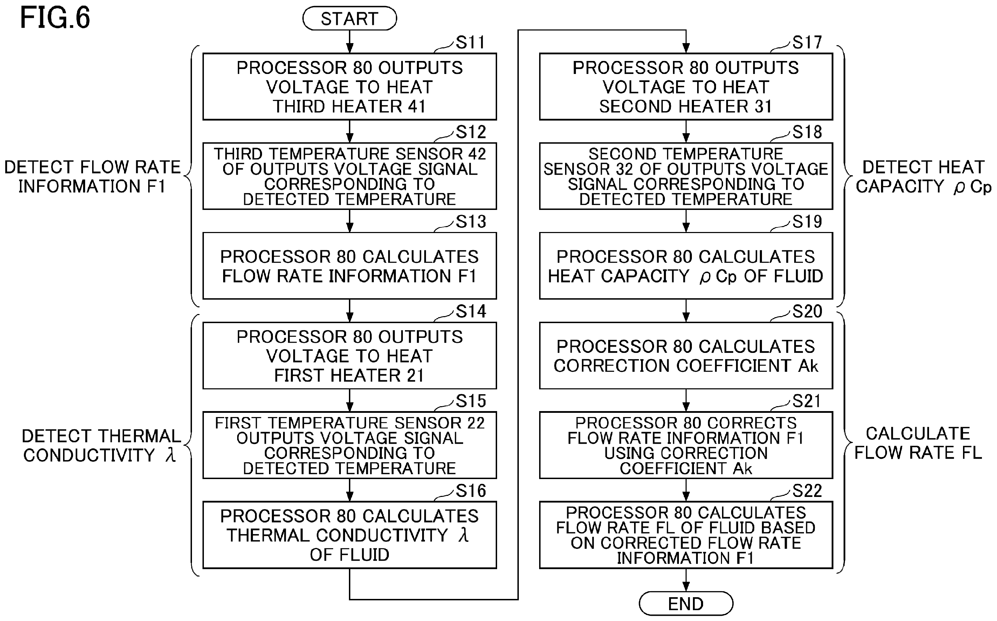

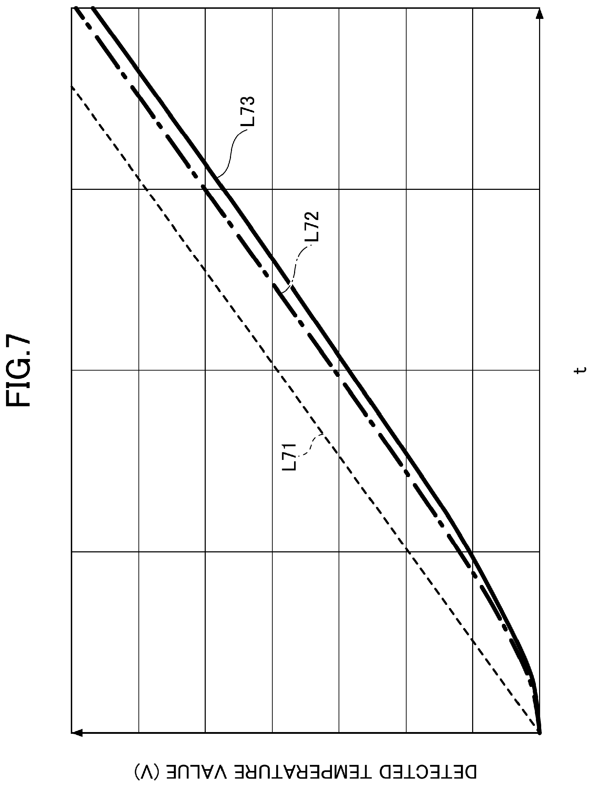

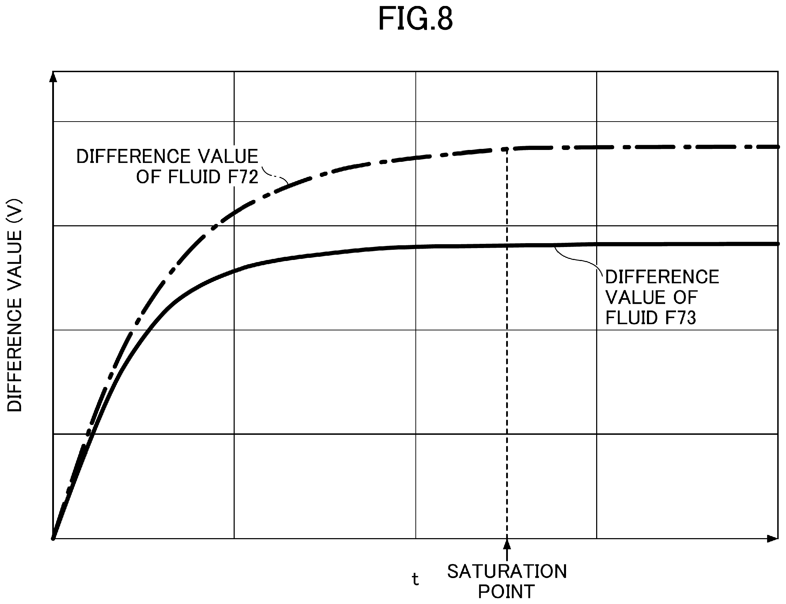

Next, a detection method using the flow sensor 1 will be described with reference to FIGS. 6 to 8. FIG. 6 is a flowchart illustrating an example of the detection method by the flow sensor 1. FIGS. 7 and 8 are drawings illustrating a principle of detecting the heat capacity ρCp of the fluid.

First, the flow sensor 1 detects the flow rate information F1 of the fluid. First, in step S11, the processor 80 outputs the voltage V43 into the third heater 41 to heat the third heater 41 to a predetermined temperature. Specifically, the microcontroller 309 outputs into the multiplexer 305 a selection signal for outputting the voltage V43 into the third heater 41. The multiplexer 305 outputs the voltage V43 into the third heater 41 in accordance with the input selection signal. The temperature of the third heater 41 is maintained at a substantially constant temperature after reaching the predetermined temperature. The operation for keeping the temperature constant is referred to as "constant temperature operation" A duration in which the third heater 41 operates in the constant temperature operation is referred to as a "constant temperature duration". The "constant temperature operation" and the "constant temperature duration" are the same for the first heater 21 and the second heater 31.

When fluid flows through the flow sensor 1, a high-temperature region of the temperature distribution formed around the third heater 41 is biased toward the third temperature sensor 422 located on the +Z side (upstream side) of the third heater 41. Conversely, a low-temperature region of the temperature distribution formed around the third heater 41 is biased toward the third temperature sensor 421 located on the -Z side (downstream side) of the third heater 41. That is, when fluid flows through the flow sensor 1, the temperature T32 detected by the third temperature sensor 422 becomes higher than the temperature T31 detected by the third temperature sensor 421.

Subsequently, in step S12, the third temperature sensor 422 of the third sensor unit 40 outputs a voltage signal V32 corresponding to the detected temperature T32 into the processor 80. Specifically, the voltage signal V32 output from the third temperature sensor 422 is output into the microcontroller 309 via the multiplexer 304 and the analog-to-digital converter 306. The third temperature sensor 421 also outputs a voltage signal V31 corresponding to the detected temperature T31 to the processor 80. Specifically, the voltage signal V31 output from the third temperature sensor 421 is output into the microcontroller 309 via the multiplexer 304 and the analog-to-digital converter 306.

Subsequently, in step S13, the processor 80 calculates a difference between the voltage values of the voltage signals V32 and V31. Specifically, the microcontroller 309 calculates a difference between the voltage values of the input voltage signals V32 and V31. The difference between the voltage values of the voltage signals V32 and V31 corresponds to the flow rate detection value detected by the third temperature sensor 42. That is, the difference between the voltage values of the voltage signals V32 and V31 is an example of the flow rate information F1. The difference between the voltage values of the voltage signals V32 and V31 may be referred to as "flow rate information F1 before correction".

Next, the flow sensor 1 detects the thermal conductivity λ of the fluid. First, in step S14, the processor 80 outputs the voltage V41 into the first heater 21 and heats the first heater 21 to a predetermined temperature. Specifically, the microcontroller 309 outputs a selection signal for outputting the voltage V41 into the first heater 21 into the multiplexer 305. The multiplexer 305 outputs the voltage V41 into the first heater 21 in accordance with the input selection signal. The temperature of the first heater 21 is maintained at approximately a constant temperature after reaching a predetermined temperature. That is, the first heater 21 operates at a constant temperature.

Subsequently, in step S15, the plurality of first temperature sensors 22 output voltage signals corresponding to the detected temperatures into the processor 80. The first temperature sensors 221 and 223 outputs the voltage signal V11 corresponding to the detected temperature T11 into the processor 80. Specifically, the voltage signal V11 output from the first temperature sensors 221 and 223 is output into the microcontroller 309 via the multiplexer 304 and the analog-to-digital converter 306. The first temperature sensors 222 and 224 output the voltage signal V12 corresponding to the detected temperature T12 into the processor 80. Specifically, the voltage signal V12 output from the first temperature sensors 222 and 224 is output into the microcontroller 309 via the multiplexer 304 and the analog-to-digital converter 306.

Then, in step S16, the processor 80 calculates the thermal conductivity λ of the fluid. Here, the temperature T11 detected by the first temperature sensors 221 and 223 disposed close to the first heater 21 is higher than the temperature T12 detected by the first temperature sensors 222 and 224 disposed farther than the first temperature sensor 221 with respect to the first heater 21.

A specific processing flow for calculating the thermal conductivity λ is, for example, as follows. First, the microcontroller 309 calculates a differential voltage DT2 between the voltage corresponding to the high-temperature side temperature T11 from the voltage signal V11 and the voltage corresponding to the low-temperature side temperature T12 from the voltage signal V12. The differential voltage DT2 is approximately proportional to the temperature difference [T11 - T12]. Further, the microcontroller 309 multiplies the differential voltage DT2 by, for example, a conversion coefficient Bk stored in a storage medium provided in the microcontroller 309. The conversion coefficient Bk is a coefficient for converting the differential voltage DT2 into the thermal conductivity λ. The conversion coefficient Bk may be calculated in advance from measurement data. The conversion coefficient Bk may be stored in the storage medium in advance. Thus, the microcontroller 309 calculates the thermal conductivity λ of the fluid.

The microcontroller 309 can also calculate the thermal conductivity λ of the fluid based on, for example, a differential voltage DT3 between the first temperature sensor 221 and the first temperature sensor 222 or a differential voltage DT4 between the first temperature sensor 223 and the first temperature sensor 224. That is, the thermal conductivity λ of the fluid can be calculated by multiplying the differential voltage DT3 or the differential voltage DT4 by the conversion coefficient Bk.

However, each of the differential voltages DT3 and DT4 is a differential voltage based on the voltage signals of one pair of temperature sensors (set of the first temperature sensor 221 and the first temperature sensor 222, or set of the first temperature sensor 223 and the first temperature sensor 224). Additionally, the differential voltage DT2 is a differential voltage based on the voltage signals of two pairs of temperature sensors (set of first temperature sensor 221 and first temperature sensor 222, and set of first temperature sensor 223 and first temperature sensor 224). Therefore, the voltage value of the differential voltage DT2 is approximately twice as high as the voltage values of the differential voltages DT3 and DT4. Thus, the signal-to-noise ratio can be improved. As a result, the detection accuracy of the thermal conductivity λ can be improved by using the differential voltage DT2.

Next, the flow sensor 1 detects the heat capacity ρCp of the fluid. First, the principle of detecting the heat capacity ρCp of the fluid will be described with reference to FIGS. 7 and 8.

First, reference is made to FIG. 7. A horizontal axis of FIG. 7 indicates elapsed time t after start of heating of the second heater 31. The vertical axis of FIG. 7 indicates the temperature detected by the second temperature sensor 32 of the fluid whose temperature detection value is increased according to the elapsed time t after start of heating. The detected temperature value corresponds to the value of the voltage signal output from the second temperature sensor 32. The temperature of the fluid is obtained by dividing the value of the voltage signal output from the second temperature sensor 32, by a temperature conversion coefficient S.

A line L71 in FIG. 7 shows a temperature profile of an ideal fluid F71 having zero heat capacity. The ideal fluid F71 corresponds to a virtual reference fluid. For example, the ideal fluid F71 may be regarded as a vacuum measurement environment. The vertical axis of FIG. 7 with respect to the ideal fluid F71 is assumed to be a virtual temperature value (voltage value). The temperature of the ideal fluid F71 can be calculated by dividing the virtual temperature value by the temperature conversion coefficient S.

A line L72 in FIG. 7 shows a temperature profile of any fluid F72 having heat capacity β1. A line L73 in FIG. 7 indicates a temperature profile of any fluid F73 having heat capacity β2. It is to be noted that heat capacity β2 is larger than heat capacity β1.

A virtual temperature value Vi1 of the ideal fluid F71 increases in proportion to the elapsed time t. The relationship between the virtual temperature value Vi1 of the ideal fluid F71 and the elapsed time t is expressed by Equation (1).$Vi 1 = \left(α⋅t\right) ⋅ S$ (1)

α is a temperature rise coefficient [K/sec] of the ideal fluid F71. S is the aforementioned temperature conversion coefficient [mV/K].

However, the detected temperature value of the fluid F72 rises more slowly than that of the ideal fluid F71. The reason why the detected temperature value of the fluid F72 rises more slowly than the virtual temperature value of the ideal fluid F71 is that the fluid F72 has heat capacity β1. The relationship between the detected temperature value Vg1 of the fluid F72 and the elapsed time t is expressed by Equation (2).$Vg 1 = \left(α⋅t\right) ⋅ S + β 1 ⋅ \left({exp}^{- γt}-1\right) ⋅ S$ (2)

γ is any constant determined by the fluid.

From Equations (1) and (2), the heat capacity β1 of the fluid F72 is obtained as follows. First, Equation (3) is obtained by subtracting Equation (2) from Equation (1).$Vi 1 - Vg 1 = - β 1 ⋅ \left({exp}^{- γt}-1\right) ⋅ S$ (3)

[Vi1 - Vg1] obtained by Equation (3) corresponds to a difference value between the detected temperature value of the fluid output from the second temperature sensor 32 and the virtual temperature value of the ideal fluid. The change of the difference value according to the elapsed time t will be described with reference to FIG. 8. A horizontal axis of FIG. 8 represents the elapsed time t after start of heating of the second heater 31. A vertical axis of FIG. 8 represents the difference value between the detected temperature value of the fluid and the virtual temperature value of the ideal fluid.

As shown in FIG. 8, when the elapsed time t is sufficiently large, "exp^{- γt}" can be approximated to "0". That is, the difference value between the detected temperature value of the fluid and the virtual temperature value of the ideal fluid reaches saturation. As a result, Equation (3) is transformed into Equation (4). Furthermore, Equation (4) is transformed into Equation (5). The heat capacity β1 can be calculated from Equation (5).$Vi 1 - Vg 1 = β 1 ⋅ S$ (4) $β 1 = \left(Vi1-Vg1\right) / S$ (5)

Examples of time points at which the difference value between the detected temperature value of the fluid and the virtual temperature value of the ideal fluid reaches saturation (hereinafter referred to as "saturation points") include t = 50 milliseconds and t = 100 milliseconds.

The processor 80 can calculate the virtual temperature value of the ideal fluid after the saturation point by referring to the temperature rise coefficient α, the temperature conversion coefficient S, and the elapsed time t counted using a counting circuit stored in the microcontroller 309. The processor 80 can also calculate the heat capacity of the fluid by referring to the difference value between the detected temperature value of the fluid after the saturation point and the virtual temperature value of the ideal fluid.

Since the heat capacity β2 of the fluid F73 is larger than the heat capacity β1 of the fluid F72, the detected temperature value of the fluid F73 rises more slowly than that of the fluid F72. However, other characteristics of the fluid F73 are the same as those of the fluid F72. Therefore, the heat capacity β2 of the fluid F73 can be obtained from Equation (6).$β 2 = \left(Vi1-Vg2\right) / S$ (6)

By replacing the voltage signal V21 corresponding to the temperature T21 detected by the second temperature sensor 32 with "Vg1" of Equation (5) or "Vg2" of Equation (6), the processor 80 can calculate the heat capacity ρCp of any fluid.$ρCp = \left(Vi1-V21\right) / S$ (7)

Next, an example of a flow of detecting the heat capacity ρCp of a fluid will be described. First, in step S17, the processor 80 outputs the voltage V42 into the second heater 31. Specifically, the microcontroller 309 outputs to the multiplexer 305, a selection signal for outputting the voltage V42 into the second heater 31. The multiplexer 305 outputs the voltage V42 into the second heater 31 in accordance with the input selection signal. At this time, the microcontroller 309 increases the voltage value of the voltage V42 according to the elapsed time t, for example, and raises the temperature of the second heater 31 at a constant speed. The operation of the heater for raising the temperature in accordance with the elapsed time t is referred to as a "temperature rise operation". A duration in which the second heater 31 performs the temperature rise operation is referred to as a "temperature rise duration". The "temperature rise operation" and the "temperature rise duration" are the same for the first heater 21 and the third heater 41.

Subsequently, in step S18, the second temperature sensor 32 sequentially outputs a plurality of voltage signals corresponding to the temperature of the fluid at a plurality of time points during the temperature rise duration. Thus, the second temperature sensor 32 outputs information on the temperature change of the fluid during the temperature rise duration. Specifically, the second temperature sensors 321 and 322 output a plurality of voltage signals V21 at a plurality of time points during the temperature rise duration.

The plurality of voltage signals V21 sequentially output from the second temperature sensors 321 and 322, are output into the microcontroller 309 via the multiplexer 304 and the analog-to-digital converter 306.

Subsequently, in step S19, the processor 80 calculates the heat capacity ρCp of the fluid using, for example, Equation (7). Specifically, the microcontroller 309 calculates the heat capacity ρCp of the fluid based on the plurality of voltage signals V21 sequentially input while referring to, for example, the temperature rise coefficient α stored in the microcontroller 309, the temperature conversion coefficient S, and the elapsed time t counted using the counting circuit.

Next, the flow sensor 1 calculates the flow rate FL of the fluid. First, in step S20, the processor 80 calculates, using [ρCp/λ], the correction coefficient Ak that is a detection sensitivity ratio with respect to the reference gas. For example, the processor 80 calculates the correction coefficient Ak by multiplying a conversion coefficient Ck by [ρCp/λ]. As the conversion coefficient Ck, the proportional relationship between the detection sensitivity ratio and pCp/λ shown in FIG. 2 can be used. The conversion coefficient Ck may be stored in advance, for example, in a storage medium provided in the microcontroller 309.

Subsequently, in step S21, the microcontroller 309 of the processor 80 calculates the voltage value corresponding to the flow rate information F1 after correction by dividing the voltage value corresponding to the flow rate information F1 before correction by the correction coefficient Ak. At this time, the microcontroller 309 may calculate the voltage value corresponding to the flow rate information F1 after correction by dividing a subtracted value, obtained by subtracting a predetermined offset value from the voltage value corresponding to the flow rate information F1 before correction, by the correction coefficient Ak. The flow rate information F1 after correction approximately coincides with the flow rate information F1 of the reference gas, for example. That is, the flow rate information F1 independent of the type of fluid or the like is calculated.

Subsequently, in step S22, the processor 80 converts, by using a predetermined conversion equation, the voltage value corresponding to the flow rate information F1 after correction into the flow rate FL of the fluid. Specifically, the microcontroller 309 calculates the flow rate FL corresponding to the flow rate information F1 after correction by referring to, for example, an equation (predetermined conversion equation) for converting the flow rate information F1 (voltage information), of the reference gas stored in a storage medium provided in the microcontroller 309, into the flow rate FL. Thus, the microcontroller 309 calculates the flow rate FL of the fluid.

In the example shown in FIG. 6, the flow sensor 1 detects information related to the fluid in an order of: the flow rate information F1 before correction, the thermal conductivity λ, and the heat capacity ρCp. However, the detection order of such information related to the fluid is not limited.

### [Modification]

### <Overall Configuration>

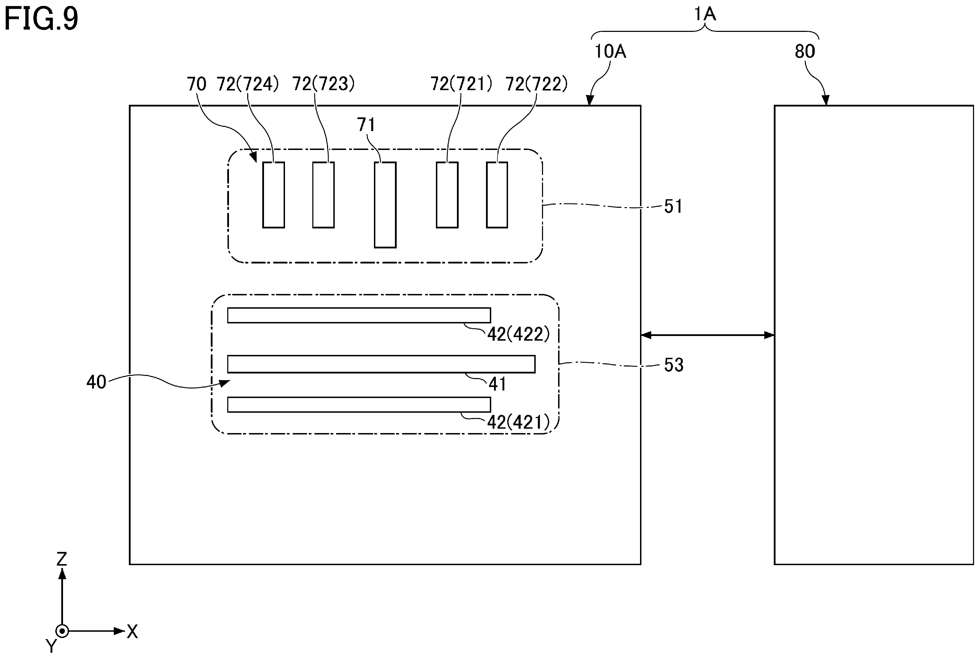

Next, an example of the overall configuration of the flow sensor 1A according to a modification of the embodiment will be described with reference to FIG. 9. FIG. 9 is a block diagram schematically illustrating an example of an overall configuration of a flow sensor 1A according to the modification. In the flow sensor 1A according to the modification, components similar to those of the flow sensor 1 according to the embodiment are denoted by the same reference numerals, and description thereof will be omitted.

As shown in FIG. 9, a detector 10A of the flow sensor 1A includes a fourth sensor unit 70. In the example shown in FIG. 9, the fourth sensor unit 70 is disposed on the +Z side (downstream side) of the third sensor unit 40. However, a position of the fourth sensor unit 70 is not limited thereto.

The fourth sensor unit 70 includes a fourth heater 71 and a plurality of fourth temperature sensors 72. The fourth heater 71 has a longitudinal direction in the Z direction. The fourth heater 71 includes, for example, a heating resistor generating heat by energization. However, the fourth heater 71 may be another heating element.

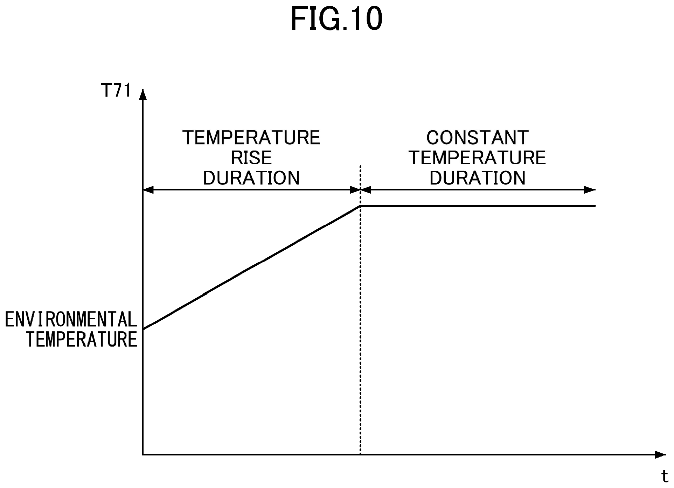

The plurality of fourth temperature sensors 72 includes, for example, four fourth temperature sensors 721, 722, 723, and 724. In the example shown in FIG. 10 (a), two fourth temperature sensors 72 (721, 722) are disposed on the +X side with respect to the fourth heater 71. The other two fourth temperature sensors 72 (723, 724) are disposed on the -X side with respect to the fourth heater 71. However, the number of fourth temperature sensors 72 is not limited to four.

The plurality of fourth temperature sensors 72 include any one of a thermistor, a linear resistance element, a platinum resistance thermometer, a thermocouple, a thermopile, and the like. It is preferable, in terms of characteristics that the plurality of fourth temperature sensors 72 are of the same type. However, the plurality of fourth temperature sensors 72 are not necessarily of the same type, as it is possible to detect temperatures even if they are not of the same type. Each of the plurality of fourth temperature sensors 72 shown in FIG. 9 is a thermopile including a resistance thermometer.

The plurality of fourth temperature sensors 72 are aligned in a direction orthogonal to the Z direction. For example, the plurality of fourth temperature sensors 72 are disposed in the X direction. As shown in FIG. 9, the fourth temperature sensor 721 is disposed closer to the fourth heater 71 than the fourth temperature sensor 722. The fourth temperature sensor 723 is disposed closer to the fourth heater 71 than the fourth temperature sensor 724.

The fourth heater 71 is configured to switch between a constant temperature operation and a temperature rise operation. For example, the fourth heater 71 performs a temperature rise operation after start of heating and then performs a constant temperature operation. The plurality of fourth temperature sensors 72 output voltage signals for calculating the heat capacity ρCp of the fluid during a temperature rise duration when the fourth heater 71 performs a temperature rise operation. The plurality of fourth temperature sensors 72 output voltage signals for calculating the thermal conductivity λ of the fluid during a constant temperature duration when the fourth heater 71 performs a constant temperature operation. That is, the fourth sensor unit 70 corresponds to a sensor unit that also serves as the first sensor unit 20 and the second sensor unit 30 according to the embodiment. The processor 80 calculates the thermal conductivity λ and the heat capacity ρCp of the fluid based on the voltage signal output from the fourth sensor unit 70. The processor 80 calculates the correction coefficient Ak based on the thermal conductivity λ and the heat capacity ρCp of the fluid, corrects the flow rate information F1 of the fluid, and calculates the flow rate FL in the same manner as in the flow sensor 1 according to the embodiment.

### <Detection Operation of Thermal Conductivity λ and Heat Capacity ρCp>

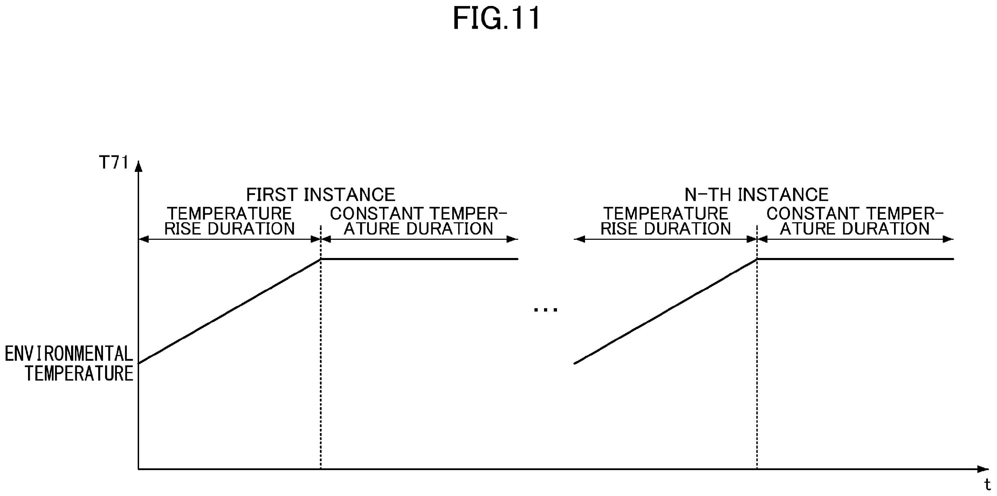

Next, an example of the detection operation of the thermal conductivity λ and the heat capacity ρCp in the flow sensor 1A will be described with reference to FIGS. 10 and 11. FIG. 10 is a graph illustrating an example of a temperature profile of the fourth heater 71 switching between a temperature rise operation and a constant temperature operation. The horizontal axis of FIG. 10 indicates the elapsed time t after start of heating of the fourth heater 71. The vertical axis of FIG. 10 indicates a temperature T71 of the fourth heater 71. FIG. 11 is a graph illustrating an example of a temperature profile of the fourth heater 71 repeating the temperature rise operation and the constant temperature operation. The horizontal axis of FIG. 11 indicates the elapsed time t after start of heating of the fourth heater 71. The vertical axis of FIG. 11 indicates the temperature T71 of the fourth heater 71.

As shown in FIG. 10, the fourth heater 71 performs a temperature rise operation in response to a voltage signal from the processor 80. That is, the temperature T71 of the fourth heater 71 rises at a constant speed, for example. In response to this, the temperature of the fluid also rises. During the temperature rise duration, the fourth temperature sensor 72 sequentially outputs, at predetermined time intervals into the processor 80, voltage signals V71 relating to the temperature of the fluid. The processor 80 calculates the heat capacity ρCp of the fluid based on the plurality of voltage signals V71 sequentially output from the fourth temperature sensor 72. When calculating the heat capacity ρCp of the fluid, the processor 80 executes, for example, processing based on Equation (8).$ρCp = \left(Vi1-V71\right) / S$ (8)

Subsequently, the fourth heater 71 performs a constant temperature operation according to the voltage signal from the processor 80. That is, the temperature T71 of the fourth heater 71 is kept constant. During this constant temperature duration, the fourth temperature sensor 72 outputs, into the processor 80, a voltage signal V61 relating to the detected temperature of the fluid. The processor 80 calculates the thermal conductivity λ of the fluid based on the voltage signal V61 output from the fourth temperature sensor 72. As in the embodiment, the processor 80 calculates the thermal conductivity λ of the fluid based on the voltage signals corresponding to the temperatures output from each of the plurality of fourth temperature sensors 721, 722, 723, and 724.

Further, as shown in FIG. 11, the fourth heater 71 may perform a second temperature rise operation in accordance with the voltage signal from the processor 80. After the second temperature rise operation, the fourth heater 71 may perform a second constant temperature operation in accordance with the voltage signal from the processor 80. The fourth heater 71 may repeat, N instances, a cycle including the temperature rise operation and the constant temperature operation. N is a natural number equal to or greater than two.

In the second temperature rise duration, the fourth temperature sensor 72 sequentially outputs, as in the first temperature rise duration, voltage signals corresponding to the temperature of the fluid. In the second temperature rise duration, the processor 80 calculates the heat capacity ρCp of the fluid based on the voltage signals sequentially output from the fourth temperature sensor 72. In the second constant temperature duration, the fourth temperature sensor 72 outputs, as in the first constant temperature duration, voltage signals corresponding to the temperature of the fluid. In the second constant temperature duration, the processor 80 calculates the thermal conductivity λ of the fluid based on the voltage signals output from the fourth temperature sensor 72.

In a case where the fourth heater 71 repeats, N instances, the cycle including the temperature rise operation and the constant temperature operation, the processor 80 calculates a set of values related to the N heat capacities ρCp (ρCp1, ρCp2, ..., ρCpn). The processor 80 may calculate an average value of the heat capacities ρCp from the values related to the N heat capacities ρCp (ρCp1, ρCp2, ..., ρCpn). The processor 80 also calculates a set of values related to the N thermal conductivities λ (λ1, λ2, ..., λn). The processor 80 may calculate an average value of the thermal conductivities λ from the numerical values related to the N thermal conductivities λ (λ1, λ2, ..., λn). By using the respective average values of the heat capacities ρCp and the thermal conductivities λ, the heat capacities ρCp and the thermal conductivities λ can be detected with high accuracy.

The processor 80 may also calculate the correction coefficient Ak based on the average value of the heat capacities ρCp and the average value of the thermal conductivities λ. Since the correction coefficient Ak is calculated using the heat capacities ρCp and the thermal conductivities λ detected with high accuracy, the correction accuracy of the flow rate information F1 can be enhanced. Thus, the flow rate FL of the fluid can be detected with high accuracy.

Further, the present invention is not limited to these embodiments, but various variations and modifications may be made without departing from the scope of the present invention.

The clauses of the present invention are, for example, as follows.
<1> A flow sensor including:
   a detector configured to output:
      one or more first detection signals for calculating thermal conductivity of a fluid;
      one or more second detection signals for calculating heat capacity of the fluid; and
      one or more third detection signals for calculating flow rate information of the fluid; and
   a processor configured to execute processing for correcting the flow rate information using a correction coefficient based on the thermal conductivity calculated from the one or more first detection signals and the heat capacity calculated from the one or more second detection signals.
<2> The flow sensor according to <1>, wherein the processor is configured to calculate the correction coefficient based on a value obtained by dividing the heat capacity of the fluid by the thermal conductivity.
<3> The flow sensor according to <1> or <2>, wherein:
   the detector includes:
      a first sensor unit configured to output the one or more first detection signals; and
      a second sensor unit configured to output the one or more second detection signals;
   the first sensor unit includes:
      a first heater configured to heat the fluid so as to acquire the one or more first detection signals; and
      one or more first temperature sensors configured to output the one or more first detection signals each corresponding to a temperature of the fluid heated by the first heater; and
   the second sensor unit includes:
      a second heater configured to heat the fluid so as to acquire the one or more second detection signals; and
      one or more second temperature sensors configured to output the one or more second detection signals each corresponding to temperature of the fluid heated by the second heater.
<4> The flow sensor according to <3>, wherein:
   the second heater is configured to increase the temperature of the fluid according to elapsed time after start of heating;
   each of the one or more second temperature sensors is configured to sequentially output a plurality of the second detection signals each corresponding to the temperature of the fluid to the processor at a plurality of time points during a temperature rise duration in which the temperature of the fluid is increased; and
   the processor is configured to calculate the heat capacity based on the plurality of the second detection signals sequentially output from the second temperature sensor.
<5> The flow sensor according to <4>, wherein the processor is configured to calculate the heat capacity based on a difference value between a detected temperature value of the fluid indicated by the second detection signals and a virtual temperature value of an ideal fluid having zero heat capacity, the difference value after a time when a change of the difference value reaches saturation.
<6> The flow sensor according to any one of <3> to <5>, wherein:
   the first sensor unit includes a plurality of the first temperature sensors; and
   a direction in which the plurality of the first temperature sensors are aligned is orthogonal to a flow direction of the fluid.
<7> The flow sensor according to any one of <3> to <6>, wherein:
   the second sensor unit includes a plurality of the second temperature sensors;
   the second heater is disposed between the plurality of the second temperature sensors; and
   a direction in which the plurality of the second temperature sensors are aligned is orthogonal to the flow direction of the fluid.
<8> The flow sensor according to <7>, wherein:
   a distance between the second heater and one of the plurality of second temperature sensors that is disposed closest to the second heater is smaller than a distance between the first heater and one of the plurality of first temperature sensors that is disposed closest to the first heater.
<9> The flow sensor according to <1> or <2>, wherein:
   the detector includes a heater and a temperature sensor configured to output the one or more first detection signals and the one or more second detection signals;
   the heater is configured to switch between a constant temperature operation and a temperature rise operation; and
   the temperature sensor is configured to output the one or more first detection signals in constant temperature duration in which the heater performs the constant temperature operation and output the one or more second detection signals during a temperature rise duration in which the heater performs the temperature rise operation.
<10> The flow sensor according to <9>, wherein:
   the heater is configured to repeat, N instances, a cycle including the constant temperature operation and the temperature rise operation;
   the temperature sensor is configured to sequentially output the one or more first detection signals during each of N instances of the constant temperature duration corresponding respectively to the N instances of the constant temperature operation, and sequentially output the one or more second detection signals during each of N instances of the temperature rise duration corresponding respectively to the N instances of the temperature rise operation;
   the processor is configured to calculate the correction coefficient based on:
      an average value of the thermal conductivity based on a plurality of sets of the one or more first detection signals, each of the sets input in a corresponding constant temperature duration; and
      an average value of the heat capacity based on a plurality of sets of the one or more second detection signals, each of the sets input in a corresponding temperature rise duration.
<11> A program for causing a processor, which is electrically connected to a detector, to:
   calculate thermal conductivity of a fluid from a first detection signal output from the detector;
   calculate heat capacity of the fluid from a second detection signal output from the detector;
   calculate flow rate information of the fluid from a third detection signal output from the detector;
   calculate a correction coefficient based on the thermal conductivity and the heat capacity; and
   correcting the flow rate information using the correction coefficient.

The present application is based on and claims priority to Japanese Patent Application No. 2024-008144 filed on January 23, 2024 with the Japan Patent Office, the entire contents of which are hereby incorporated by reference.

### REFERENCE SIGNS LIST

- 1, 1A: flow sensor
- 10, 10A: detector
- 20: first sensor unit
- 21: first heater
- 22: first temperature sensor
- 30: second sensor unit
- 31: second heater
- 32: second temperature sensor
- 40: third sensor unit
- 41: third heater
- 42: third temperature sensor
- 51: first membrane
- 52: second membrane
- 53: third membrane
- 60: support member
- 70: fourth sensor unit
- 71: fourth heater
- 72: fourth temperature sensor
- 80: processor
- 309: microcontroller

## Claims

1. A flow sensor comprising:
a detector configured to output:
one or more first detection signals for calculating thermal conductivity of a fluid;
one or more second detection signals for calculating heat capacity of the fluid; and
one or more third detection signals for calculating flow rate information of the fluid; and
a processor configured to execute processing for correcting the flow rate information using a correction coefficient based on the thermal conductivity calculated from the one or more first detection signals and the heat capacity calculated from the one or more second detection signals.

2. The flow sensor according to claim 1, wherein the processor is configured to calculate the correction coefficient based on a value obtained by dividing the heat capacity of the fluid by the thermal conductivity.

3. The flow sensor according to claims 1 or 2, wherein:
the detector includes:
a first sensor unit configured to output the one or more first detection signals; and
a second sensor unit configured to output the one or more second detection signals;
the first sensor unit includes:
a first heater configured to heat the fluid so as to acquire the one or more first detection signals; and
one or more first temperature sensors configured to output the one or more first detection signals each corresponding to a temperature of the fluid heated by the first heater; and
the second sensor unit includes:
a second heater configured to heat the fluid so as to acquire the one or more second detection signals; and
one or more second temperature sensors configured to output the one or more second detection signals each corresponding to temperature of the fluid heated by the second heater.

4. The flow sensor according to claim 3, wherein:
the second heater is configured to increase the temperature of the fluid according to elapsed time after start of heating;
each of the one or more second temperature sensors is configured to sequentially output a plurality of the second detection signals each corresponding to the temperature of the fluid to the processor at a plurality of time points during a temperature rise duration in which the temperature of the fluid is increased; and
the processor is configured to calculate the heat capacity based on the plurality of the second detection signals sequentially output from the second temperature sensor.

5. The flow sensor according to claim 4, wherein the processor is configured to calculate the heat capacity based on a difference value between a detected temperature value of the fluid indicated by the second detection signals and a virtual temperature value of an ideal fluid having zero heat capacity, the difference value after a time when a change of the difference value reaches saturation.

6. The flow sensor according to claim 3, wherein:
the first sensor unit includes a plurality of the first temperature sensors; and
a direction in which the plurality of the first temperature sensors are aligned is orthogonal to a flow direction of the fluid.

7. The flow sensor according to claim 6, wherein:
the second sensor unit includes a plurality of the second temperature sensors;
the second heater is disposed between the plurality of the second temperature sensors; and
a direction in which the plurality of the second temperature sensors are aligned is orthogonal to the flow direction of the fluid.

8. The flow sensor according to claim 7, wherein:
a distance between the second heater and one of the plurality of second temperature sensors that is disposed closest to the second heater is smaller than a distance between the first heater and one of the plurality of first temperature sensors that is disposed closest to the first heater.

9. The flow sensor according to claims 1 or 2, wherein:
the detector includes a heater and a temperature sensor configured to output the one or more first detection signals and the one or more second detection signals;
the heater is configured to switch between a constant temperature operation and a temperature rise operation; and
the temperature sensor is configured to output the one or more first detection signals in constant temperature duration in which the heater performs the constant temperature operation and output the one or more second detection signals during a temperature rise duration in which the heater performs the temperature rise operation.

10. The flow sensor according to claim 9, wherein:
the heater is configured to repeat, N instances, a cycle including the constant temperature operation and the temperature rise operation;
the temperature sensor is configured to sequentially output the one or more first detection signals during each of N instances of the constant temperature duration corresponding respectively to the N instances of the constant temperature operation, and sequentially output the one or more second detection signals during each of N instances of the temperature rise duration corresponding respectively to the N instances of the temperature rise operation;
the processor is configured to calculate the correction coefficient based on:
an average value of the thermal conductivity based on a plurality of sets of the one or more first detection signals, each of the sets input in a corresponding constant temperature duration; and
an average value of the heat capacity based on a plurality of sets of the one or more second detection signals, each of the sets input in a corresponding temperature rise duration.

11. A program for causing a processor, which is electrically connected to a detector, to:
calculate thermal conductivity of a fluid from a first detection signal output from the detector;
calculate heat capacity of the fluid from a second detection signal output from the detector;
calculate flow rate information of the fluid from a third detection signal output from the detector;
calculate a correction coefficient based on the thermal conductivity and the heat capacity; and
correcting the flow rate information using the correction coefficient.
